# EUROPEAN PATENT SPECIFICATION

(11) **EP 4 308 277 B1**
(45) Date of publication and mention of the grant of the patent: **05.03.2025**
(21) Application number: 22711970.8
(22) Date of filing: 09.03.2022
(51) Int. Cl.: B01F 23/2361, B01F 23/236

(54) **CARBONATOR COMPARTMENT**
KARBONISIERUNGSKAMMER
COMPARTIMENT DE SATURATEUR

(30) Priority: 16.03.2021 SE 2150296
(43) Date of publication of application: 24.01.2024
(73) Proprietor: Aarke AB, 113 31 Stockholm (SE)
(72) Inventor: MAGNERIUS, Melker, 112 43 Stockholm (SE); SOLBERGER, Gustav, 112 67 Stockholm (SE)
(74) Representative: Ström & Gulliksson AB
(86) International application number: PCT/EP2022/056062
(87) International publication number: WO 2022/194644

(56) References cited:
- WO-A1-2012/162762
- DE-U1- 202021 100 698
- US-A- 5 870 944

## Description

### Technical field

The present disclosure generally pertains to carbonators for carbonating beverages, and more particularly to a carbonator with a safe beverage container compartment.

### Background art

Carbonators are used for producing carbonated beverage, such as carbonated water. Carbonators for domestic use are typically designed to be placed free-standing on a table or kitchen countertop and are operated manually by a person. Such a carbonator, also known as a soda water machine, typically comprises a carbon dioxide cylinder that is connected to a nozzle that is inserted into a beverage bottle containing liquid. The carbonator further comprises an operating arrangement that allows the user to open a valve in the carbon dioxide cylinder to introduce carbon dioxide into the beverage bottle. The carbon dioxide dissolves in the liquid in the pressurised beverage bottle.

Even though unlikely, the beverage bottle may burst due to the pressure. Especially if a glass bottle is used, the carbonator need be adapted to protect the user from glass fragments should the bottle burst.

The prior art documents EP1642637A1, US4342710A and US4323090A all relate to this problem. The prior art solutions either fail to sufficiently protect the user in the event of a bursting bottle, or involve complex, bulky and costly designs for enclosing the bottle.

WO 2012/162762 A1 discloses a carbonator for carbonating a beverage in a beverage container. The carbonator comprises a rotating or sliding protective door which together with the an upright body of the carbonator may define a space in which a refillable bottle may be located, as well as a mechanical interlock that prevents the door from being opened by a user during the carbonation process.

### Summary of the invention

One object of the present disclosure is to provide a carbonator that solves at least one of the above problems.

Such a carbonator is according to the present disclosure provided in form of a carbonator for carbonating a beverage in a beverage container, wherein the carbonator comprises a beverage container compartment that comprises a first portion and a second portion that is rotatably mounted to the first portion. The first portion comprises a first groove and the second portion comprises a second groove, wherein the carbonator further comprises a retaining ring that is adapted to be arranged in the grooves to rotatably mount the second portion to the first portion.

The first and second portion thus engage in a form-fit connection, thereby providing a particularly safe beverage container compartment. In the unlikely event that the beverage container would burst inside the beverage container compartment, high separating forces acting on the first and second portion will be tolerated by the form-fit connection.

The second portion is rotatable with respect to the first portion, but is hindered from translatory movement with respect to the first portion. The rotation of the second portion may be used to lock the second portion to another component that closes the beverage container compartment. The rotation of the second portion enables a secure form-fit connection between the second portion and such component.

The grooves and the retaining ring offer a form-fit connection that tolerates large forces. The grooves may extend around the entire circumference of the first and second portions. The first and second portions may have a circular cross section thereby evenly distributing separating forces evenly along the circumferences.

The retaining ring may have a rectangular cross-section. The grooves of the first and second part may jointly form a groove of rectangular cross section. Such rectangular cross sections offer large abutment surfaces.

The grooves of the first and second part may jointly form a groove of a cross section that is slightly larger than the cross section of the retaining ring, such that the second portion may rotate at low friction.

The retaining ring may be a spiral retaining ring free from ears or other radially protruding elements that may interfere with the grooves.

The retaining ring, the first portion and/or the second portion may be made of metal. The first portion may be made of plastic.

The second portion may radially surround the first portion in the area of the first groove such that radial forces transmitted from the first portion via the retaining ring will be absorbed by the second portion.

The first portion may be provided with an inner lining that is made of metal. The inner lining may comprise a radial expansion, i.e. a portion of the inner lining that expands in a radial direction, that is adapted to bear against an end edge of the holder.

The first groove may be open radially outwards with respect to the beverage container compartment and the second groove may be open radially inwards with respect to the beverage container compartment. In the area of the first and second portions, the beverage container compartment may have a circular cross section.

The first portion, the retaining ring and the second portion form a tortuous path from inside the bottle compartment to the environment. The tortuous path may include at least two right-angled turns. Such a path may hinder beverage container fragments from exiting the beverage container compartment.

The carbonator may further comprise a compartment lid portion that is adapted to cooperate with the second portion to close the beverage container compartment. The rotatable mounting of the second portion may advantageously be used to obtain a form-fit connection between the second portion and the compartment lid portion.

The second portion and the compartment lid portion may form a tortuous path from inside the bottle compartment to the environment.

The carbonator may comprise a carbonating head comprising a dissolver nozzle for introducing carbonating medium into the beverage container, a support part for movably supporting the carbonating head between a first position and a second position, a locking mechanism operable between an unlocked state and a locked state in which the carbonating head is retained in the second position, and a base part connected to the support part and comprising a beverage container stand for the beverage container. The second portion may be comprised in the locking mechanism.

The locking mechanism may comprise members arranged on the carbonating head and on the base part, respectively. The second portion may form the locking mechanism member that is arranged on the carbonating head. The first portion may be comprised in the carbonating head. The above described rotatable mounting of the second portion to the first portion enables the second portion to engage the base part in a form-fit connection.

The base part may comprise a member of the locking mechanism, which the second portion may engage in a form-fit connection. The compartment lid portion may be comprised in the base part.

The movement of the carbonating head from the first position to the second position may be a translatory movement. The translatory movement may occur from a first vertical position to a second vertical position. The first vertical position may be vertically higher than the second vertical position. The first position may be a vertically highest position. The second position may be a vertically lowest position.

The beverage container compartment may be formed by a carbonating head together with a beverage container stand. The second portion may be locked to the beverage container stand by a rotative movement of the second portion in relation to the beverage container stand. The second portion may be locked to the beverage container stand by a rotative and translatory movement of the second portion in relation to the beverage container stand.

The carbonating head may comprise a carbonating head housing made of metal. Such a housing provides a layer of protection around the beverage container compartment.

The carbonating head housing may circumferentially surround the upper portion of the beverage container when the carbonating head is in the second position. The area radially surrounding the upper portion of the beverage container may be especially subject to beverage container fragments in the unlikely event that the beverage container would burst inside the beverage container compartment.

The carbonating head housing may comprise a lining made of metal that circumferentially surrounds the upper portion of the beverage container when the carbonating head is in the second position. In this way, an additional protective layer may be provided in the area that is especially subject to beverage container fragments in the unlikely event that the beverage container would burst inside the beverage container compartment.

Thus, the carbonator may comprise a carbonating head and a compartment lid portion that together form the carbonator compartment. The first and second portions may be comprised in the carbonating head to securely lock the carbonating head to the compartment lid portion. The first and second components may alternatively be comprised in the compartment lid portion to securely lock the carbonating head to the compartment lid portion.

### Brief description of the drawings

The present invention will be described further below by way of example and with reference to the enclosed drawings, in which:
- Figure 1: is a side view of a carbonator 1 with a carbonating head 3, a support part 4 and a base part 6,
- Figure 2: corresponds to figure 1 but with a carbonating head housing 3h and a base part housing 6h removed,
- Figures 3a-3b: are front views corresponding to figure 2 with the carbonating head 3 in a vertically highest and lowest position, respectively, and also illustrate a method A-D of operating a carbonator,
- Figure 4: is a perspective view of the carbonator 1 of figure 2 with the carbonating head 3 positioned in-between the vertically highest position and the vertically lowest position,
- Figures 5a-5c: are exploded views illustrating interaction of components of the carbonator 1 of figure 1,
- Figure 6: corresponds to figure 1 but with a support part housing 4h and the base part housing 6h removed,
- Figure 7: is a rear view corresponding to figure 6,
- Figure 8: shows internal components of the carbonating head 3 of figure 1, as viewed from the opposite side, and
- Figure 9: is an enlarged view of the lower portion of figure 8.

### Detailed description of embodiments

Embodiments of the present disclosure will now be described more fully hereinafter with reference to the accompanying figures. Like reference numbers refer to like elements throughout the description and figures.

In the figures is shown a carbonator 1 with a carbonating head 3, a support part 4, a locking mechanism 5 and a base part 6. In some of the figures, a beverage container 2 is also illustrated.

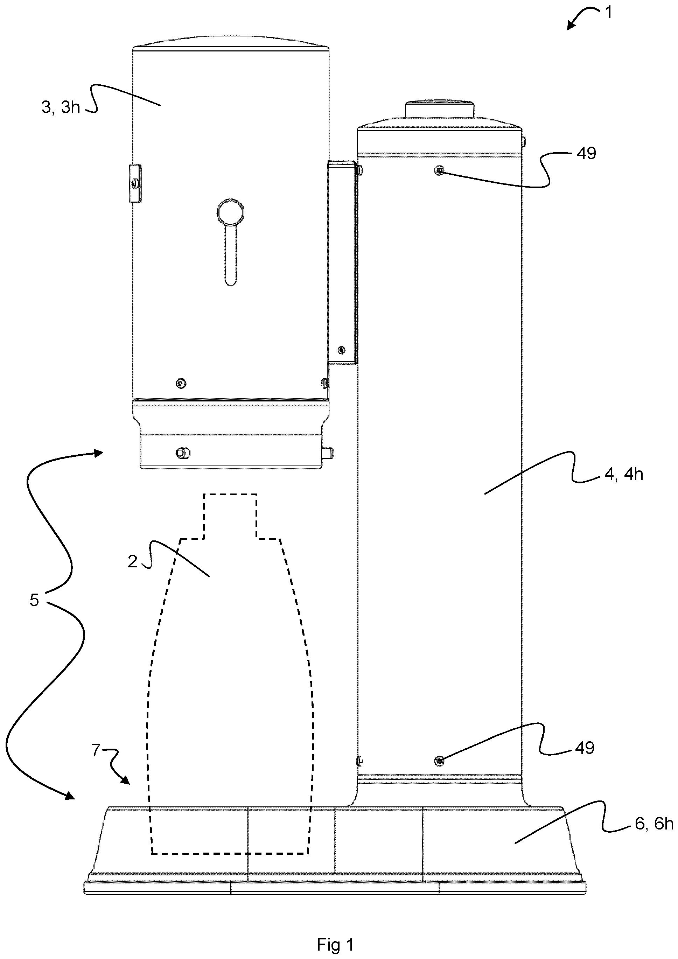

The carbonating head 3 comprises a dissolver nozzle (not shown) which during operation is immersed in liquid, typically water, contained in the beverage container 2 in form of a bottle 2. The carbonating head 3 has a generally cylindrical shape with a central longitudinal axis oriented in the vertical direction when the carbonator 1 is in operation position, see figure 1.

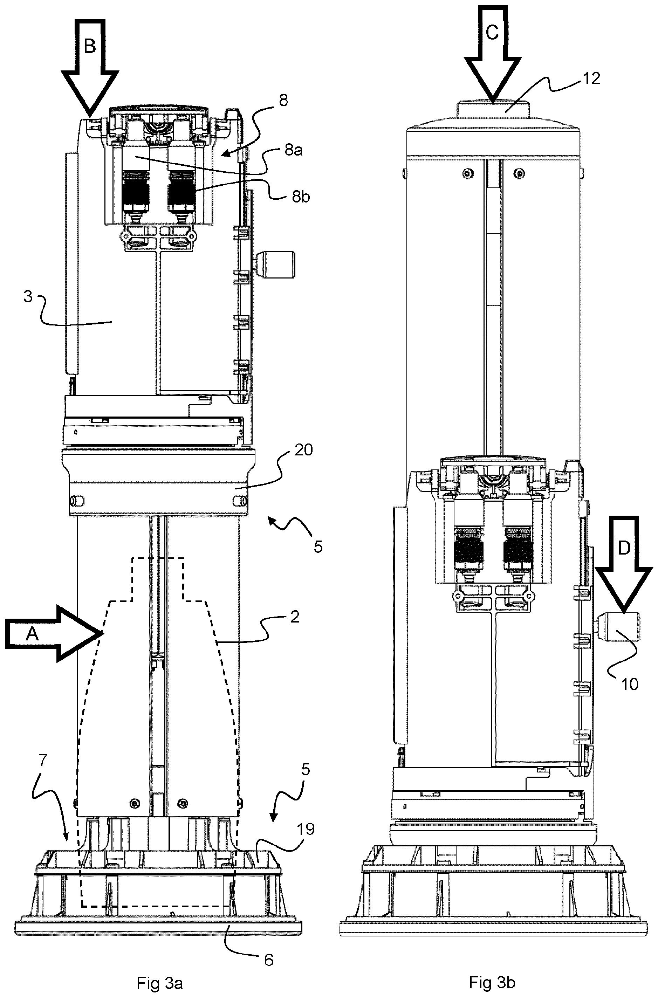

Figures 3a and 3b illustrate a method of operating the carbonator 1. The components and features of the carbonator 1 will be described further down below.

In a first step A, a user places the bottle 2 on a stationary and horizontal bottom of a bottle (beverage container) stand 7 of the base part 6. The bottle stand 7 has a bottle guiding structure that by means of gravity guides the bottle 2 to a vertical orientation straight beneath the carbonating head 3. A biasing arrangement 55, described below, within support part 4 biases the carbonating head 3 towards its vertically highest position as shown in figure 3a.

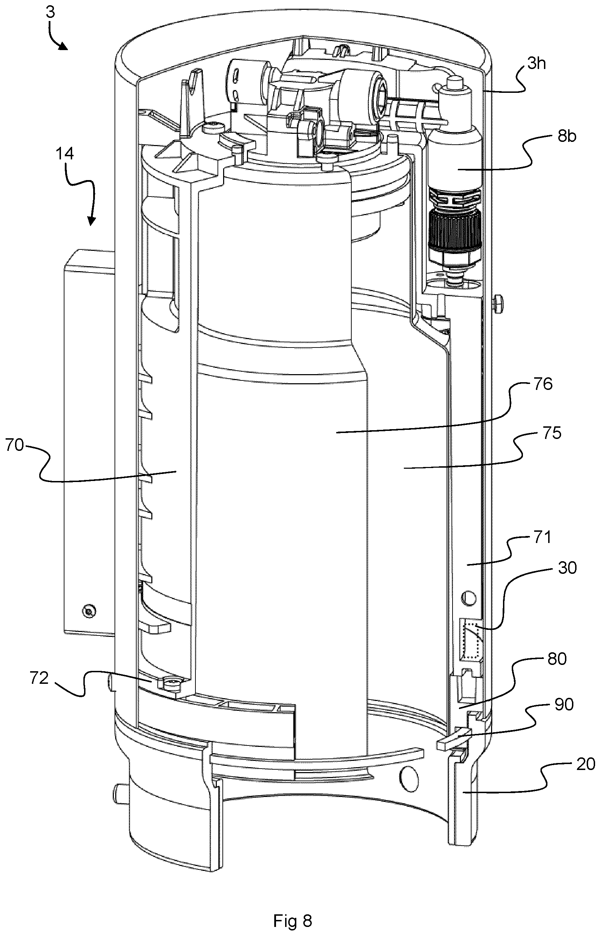

In a second step B, the user moves the carbonating head 3 downwards until the carbonating head 3 is locked to the bottle stand 7 of the base part 6 in its vertically lowest position, see figure 3b. Most conveniently, the carbonating head 3 is moved downwards by the user pushing it atop its housing by hand. The bottle 2 is now enclosed in a protecting bottle compartment 75 (see figure 8). At the end of the movement, the carbonating head 3 is automatically locked to the bottle stand 7 by means of a locking mechanism 5 having cooperating locking members 20, 19 arranged on the carbonating head 3 and on the bottle stand 7, respectively.

Preferably, the second step B involves exercising a venting valve arrangement 8 by setting it in an open state and in a closed state in succession.

In a third step C, the user presses a push button 12 on the support part 4 downwards to introduce carbonating medium into the bottle 2 via the dissolver nozzle. The pressure within the bottle 2 increases and CO₂ is dissolved in the water. When the pressure inside the bottle 2 reaches a predetermined value, e.g. 5-7 bar, the venting valve arrangement 8 opens and emits a sound generated by the gas flow through the valve arrangement 8. The pressure inside the bottle 2 remains at the predetermined value and the push button 12 may be pressed repeatedly should the user desire strongly carbonated beverage.

In a fourth step D, the user moves a release manipulator 10 of the carbonating head 3 downwards until the overpressure within the bottle has been completely relieved, by the venting valve arrangement 8 opening, and subsequently the locking mechanism 5 has been unlocked. The carbonating head 3 will next be biased back to its vertically highest position (figure 3a) by the arrangement 55 of the support part 4.

The method is now complete and the user may remove the bottle 2 with the carbonated liquid from the bottle stand 7.

After these method steps A-D, the carbonator 3 is ready to carbonate again without any preparation. The carbonating head 3, the release manipulator 10 and the push button 12 are all automatically returned to their respective vertically highest positions.

Importantly, all method steps A-D may be executed using one hand only. The bottle 2 is conveniently placed on and retrieved from a stationary horizontal surface provided by the bottle stand 7, the carbonating head 3, push button 12 and release manipulator 10 are all pushed downwards whereby the free-standing carbonator 1 needs not be held still.

The valve exercise that may form part of step B reduces the risk of the venting valve arrangement 8 becoming clogged. The opening of the venting valve arrangement 8 in step D to completely relieve the overpressure within the bottle 2, before unlocking the locking mechanism 5, prevents opening the bottle compartment 75 while there is an overpressure in the bottle 2.

The components and features of the carbonator 1 will now be described in more detail.

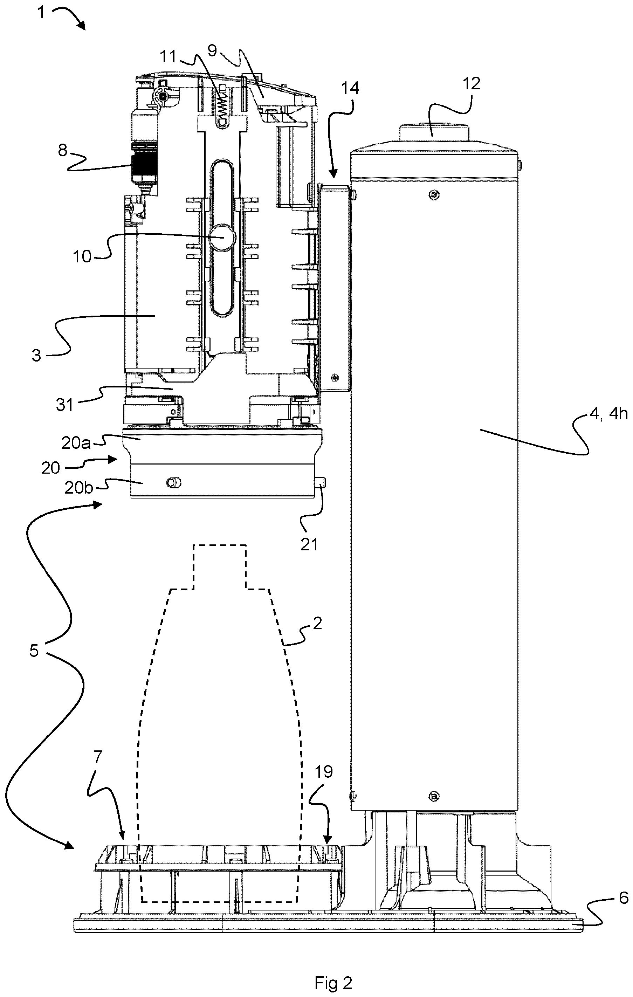

The carbonating head 3 is shown in detail in figure 2. The carbonating head 3 is vertically movably supported by the support part 4 between a vertically highest position and a vertically lowest position.

The carbonating head 3 is largely a thin-walled cylindrical structure and forms a recess extending from below into the structure. The recess forms the side and top of the above-mentioned bottle compartment 75 that is sized to enclose essentially the whole bottle 2. More precisely, the carbonating head 3 and the bottle stand 7 together form the bottle compartment 75. The bottle stand 7 may be referred to as a compartment lid portion. There is a risk that the bottle 2 may break upon introduction of carbonating medium into the bottle 2 and in such an event, the bottle compartment 75 may effectively protect the user from ejected liquid and larger bottle fragments. This is of particular importance should a glass bottle 2 be used.

The carbonating head 3 comprises sealing means (not shown) which are adapted to sealingly couple the mouth of the bottle 2 to the carbonating head 3 without requiring the bottle 2 being manually screwed or otherwise moved with respect to the carbonating head 3. The carbonating head 3 may conveniently be sealingly coupled to the mouth of the bottle 2 by the movement of the carbonating head 3 to its vertically lowest position. Suitable dissolver nozzles and sealing means are known per se, see for example EP1642637A1

A sliding lever 10, which forms the release manipulator, of the carbonating head 3 protrudes out from a lateral side thereof. As most users are right handed, most users will appreciate the sliding lever 10 being positioned on the right hand side. The sliding lever 10 is located essentially vertically centrally on the carbonating head 3. The sliding lever 10 is conveniently used both to relieve the pressure within the bottle 2 by opening the venting valve arrangement 8 and to subsequently unlock the locking mechanism 5.

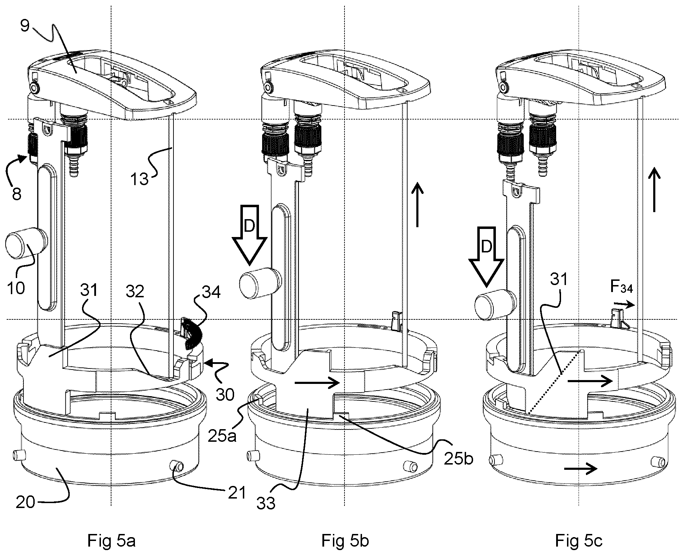

The sliding lever 10 travels in a vertical track provided in the carbonating head 3. The sliding lever 10 may be biased towards the vertically highest position by means of a sliding lever tension spring 11. The sliding lever tension spring 11 is however optional, as the sliding lever 10 is biased towards is vertically highest position by the locking sleeve return spring 34, as is described below with reference to figure 5a.

The venting valve arrangement 8 of the present embodiment comprises two venting valves 8a, 8b (see figure 3a) fluidly connected in parallel. If a user were to fill too much liquid in the bottle 2, upon carbonation some of the excess liquid may be transferred via the dissolver nozzle to the venting valve arrangement 8 and be ejected therefrom. Should a user carbonate other liquids than water, such liquids may clog the valve arrangement 8 after a period of use. The provision of two venting valves 8a, 8b in parallel reduces the risk of venting valve malfunction. Furthermore, the dual venting valves 8a, 8b reduce the time needed to completely relieve the overpressure within the bottle 2 by the sliding lever 10.

A first venting valve 8a is set to open at a first pressure of e.g. 5-7 bar and emit a sound as has been described above. A second venting valve 8b is set to open at a second pressure that is higher than the first pressure, e.g. 8-10 bar. The second venting valve 8b may thus be referred to as a safety valve. The venting valve arrangement 8 of the carbonating head 3 is operable between a closed state and an open state. Each venting valve 8a, 8b of the valve arrangement 8 is furnished with a compression spring biasing the valve 8a, 8b towards the closed state. In the open state of the venting valve arrangement 8, the bottle 2 is in fluid connection with the surrounding. More precisely the upper part, not filled with liquid, of the bottle 2 is in fluid connection with the surrounding.

The venting valve arrangement 8 is advantageously positioned to eject any liquid onto the upper part of the bottle 2. Thereby the user is informed of the inappropriate overfilling of the bottle 2.

The two venting valves 8a, 8b are in the present embodiment actuated by a single pivoting valve actuator 9 located at the top of the carbonating head 3. The pivoting valve actuator 9 is pivotally journalled on the carbonating head 3 by means of a hinge connection. A vertically movable rod actuator 13 is arranged to actuate the pivoting valve actuator 9, as is shown in figures 5a to 5c. The rod actuator 13 is in turn actuated by the locking mechanism 5.

Thus, both venting valves 8a, 8b are opened and closed (exercised) when the carbonating head 3 is moved downwards until being locked to the bottle stand 7 by the locking mechanism 5 (step B). More precisely, the venting valves 8a, 8b are exercised at the end of the stroke of the carbonating head, i.e. when the bottle stand 7 rotates the locking sleeve 20, as is described below. After the push button 12 has been depressed to carbonate the water, only the first venting valve 8a will open and signal to the user that a carbonation has been completed (step C). During carbonation, the second valve 8b is a redundant valve (safety valve). Both venting valves 8a, 8b are opened when the sliding lever 10 is moved downwards to relieve the overpressure within the bottle 2 and unlock the carbonating head from the bottle stand 7.

Returning to figure 2, the support part 4 is largely a hollow cylindrical structure receiving a CO₂ cylinder (not shown) that provides carbon dioxide to the dissolver nozzle of the carbonating head 3. At the top, the support part 4 is furnished with a pressurizing manipulator 12, which may be referred to as a push button 12, operable by a user between a vertically highest position and a vertically lowest position. The pressurizing manipulator 12 is biased towards the vertically highest position by means of the pressure within the CO₂ cylinder, a spring within the CO₂ cylinder, and/or additional biasing means (not shown).

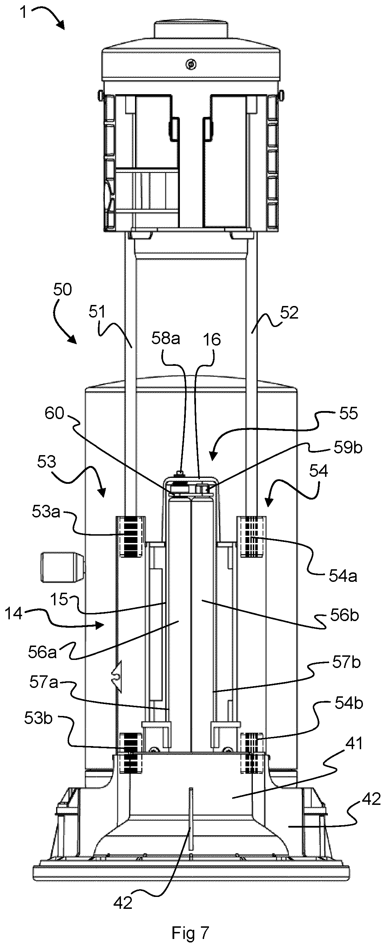

The carbonating head 3 is carried by the support part 4 by means of a carrier unit 14. The support part 4 supports the carbonating head 3 such that it is translatory movable, more precisely linearly movable, from its vertically highest position to its vertically lowest position. A biasing arrangement 55 (see figure 7) within support part 4 biases the carbonating head 3 towards its vertically highest position.

The base part 6 essentially comprises two sections, a first section (left in figure 1) with the bottle stand 7 and a second section (right in figure 1) that forms a foundation for the support part 4. The base part 6 provides a stable basis for the support part 4 and thus the carbonating head 3. The base part 6 is adapted to be placed on a flat surface such as a table or a kitchen countertop and may comprise rubberised feet or similar. Figure 2 illustrates a bottle 2 placed on the bottle stand 7 of the base part 6. The bottle stand 7 generally has the shape of a circular trough, a standing closed-bottom cylinder with a diameter greater than the height.

The locking mechanism 5 comprises members arranged on the carbonating head 3 and on the base part 6, respectively, which engage in a bayonet-fitting manner when in the locked state.

The carbonating head 3 comprises a first locking member in form of a locking sleeve 20 that is rotatably mounted on the lower end of the carbonating head 3. The locking sleeve 20 is rotatable around the central axis of the carbonating head 3. i.e. in a horizontal plane. The locking sleeve 20 comprises an upper, or proximal, portion 20a and a lower, or distal, portion 20b. The proximal portion 20a has an outer diameter that corresponds to the diameter of the carbonating head 3. The distal portion 20b has a smaller diameter and is provided with a number of, in this example three, locking protrusions 21. The locking protrusions 21 are of cylindrical form and protrude normal to distal portion 20b.

The base part 6 is configured to receive, rotate and lock the locking sleeve 20. The rotation of the locking sleeve 20 in turn causes a vertical motion of the rod actuator 13.

In more detail, the bottle stand 7 of the base part 6 is configured to receive the distal portion 20b of the locking sleeve 20. The bottle stand 7 has a second locking member in form of a receiving structure 19. The receiving structure 19 protrudes inwards from the cylindrical wall of the bottle stand 7 and has three passages forming protrusion receivers 22. The protrusion receivers 22 are formed and positioned to receive the three locking protrusions 21.

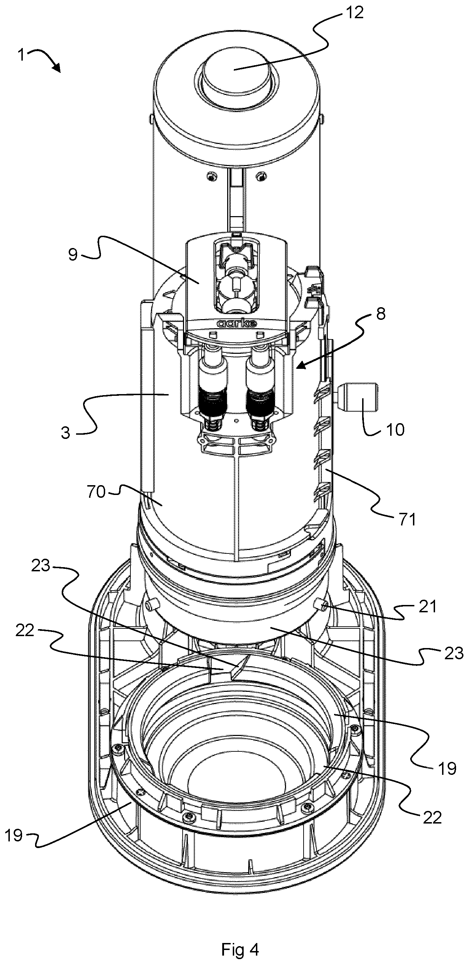

As is illustrated in figure 4, each protrusion receiver 22 comprises an inclined guide surface 23. As the respective locking protrusion 21 slides along the respective guide surface 23 the locking sleeve 20 is rotated counter clockwise, as seen from above. The guide surface 23 thus translates a vertical movement into a horizontal movement. When the locking protrusions 21 have travelled passed the protrusion receivers, the locking sleeve is rotated clockwise by the action of a locking sleeve return spring 34 (spring shown in figure 5a, spring force F₃₄ indicated in figure 5c). The locking protrusions 21 are now axially locked beneath the receiving structure 19. The locking sleeve 20 cooperates with the receiving structure 19 of the bottle stand 7 similar to a bayonet fitting, i.e. in a form-fitting manner.

Figures 5a to 5c illustrate the function of the sliding lever 10 that is used to unlock the locking sleeve 20 from the receiving structure 19. In figure 5a the sliding lever 10 is in its vertically highest position. In figure 5b, the sliding lever 10 has been pushed down halfway towards its vertically lowest position, which is shown in figure 5c.

The sliding lever 10 comprises a sliding plate that cooperates with a release member in form of a release sleeve 30. The release sleeve 30 is rotatably mounted on the lower end of the carbonating head 3, above the locking sleeve 20. As is clear from figures 1 and 2, the release sleeve 30 is covered by the carbonating head housing 3h whereas the locking sleeve 20 forms the lowermost visible part of the carbonating head 3 and adjoins the lowermost edge of its housing 3h.

The locking sleeve 20 and the release sleeve 30 cooperate such that the venting valves 8a, 8b are opened before the locking mechanism 5 is unlocked, and such that the venting valves 8a, 8b are exercised when the locking mechanism 5 is engaged.

When the sliding lever 10 is pushed down, the lower end of the sliding plate travels along a release cam surface 31 (see figure 5c) of the release sleeve 30 and causes the release sleeve 30 to rotate counter clockwise as seen from above. The release sleeve 30 further comprises an actuator cam surface 32 (see figure 5a) that cooperates with the rod actuator 13. When the release sleeve 30 rotates counter clockwise, the actuator cam surface 32 causes the rod actuator 13 to move upwards.

The release cam surface 31 and the actuator cam surface 32 are configured such that the rod actuator 13 starts travelling upwards soon after the sliding lever 10 leaves its vertically highest position, since the lower end of the rod actuator 13 rests against a short horizontal surface of the release sleeve 30 to the right of the actuator cam surface 32, as is clear from figure 5a. When the sliding lever 10 has been pushed down halfway (figure 5b), the rod actuator 13 has opened the venting valves 8a, 8b via the valve actuator 9. Should either one of the venting valves 8a, 8b not function properly, e.g. be clogged, a movement downwards of the sliding lever 10 is hindered. The sliding lever 10 is hindered from being moved to its vertically lowest position (figure 5c) before the venting valves 8a, 8b have been opened by the rod actuator 13 and the pivoting valve actuator 9. Thus, an opening of the bottle compartment 75 while there is an overpressure in the bottle 2 is prevented.

The release sleeve 30 comprises a first abutment means in form of an axial projection 33 that is caught between second and third axial projections 25a, 25b of the locking sleeve 20. When the sliding lever 10 has been pushed down halfway, the first axial projection 33 of the release sleeve 30 abuts against the third axial projection 25b of the locking sleeve (see figure 5b) and causes the locking sleeve 20 to rotate along with the release sleeve 30 counter clockwise. When the sliding lever 10 has reached its lowermost position, the locking sleeve 20 has rotated to align its locking protrusions 21 with the protrusion receivers 22, and thus the locking sleeve 20 is no longer retained axially by the receiving structure 19. The carbonating head 3 can now be biased back to its vertically highest position by the biasing arrangement 55.

When the locking sleeve 20 is rotated counter clockwise during locking the carbonating head 3 to the bottle stand 7 as described above, the second axial protrusion 25a of the locking sleeve 20 abuts against the first axial protrusion 33 of the release sleeve and causes the release sleeve 30 to rotate along with the locking sleeve 20 counter clockwise. By means of the actuator cam surface 32, the rod actuator 13 and the valve actuator 9, such rotation of the release sleeve 30 opens the venting valves 8a, 8b. When the release sleeve 30 is subsequently rotated clockwise by the locking sleeve tension spring 34 (see force F₃₄ in figure 5c), the venting valves 8a, 8b are again closed by a reverse motion of the actuator cam surface 32, the rod actuator 13 and the valve actuator 9. Thus, when the carbonating head is brought down to be locked to the base part 6, the venting valves 8a, 8b are exercised by being opened and closed in succession.

When the carbonating head 3 is locked to the base part 6, the bottle stand 7 closes the bottle compartment 75. As the compartment is dimensioned to enclose essentially the whole bottle 2 and is brought down over the bottle 2, the joint between the carbonating head 3 and the base bottle stand 7 is located close to the bottom of the bottle 2. Such a location of the joint may be particularly beneficial, as it is believed that the bottle 2 is more likely to break at an upper portion thereof, which upper portion is located remote from the joint. Furthermore, no matter where the bottle 2 breaks, a substantial pressure energy is stored in the upper portion of the bottle 2, where a compressive gas (air and CO₂) is located.

The carbonating head 3, release manipulator 10 and pressurizing manipulator 12 are all operable by a user from a respective vertically higher position to a respective vertically lower position. In the embodiments of this disclosure, they are all adapted to move downwards in the vertical direction during operation, more precisely straight downwards in the vertical direction. As will be appreciated, the respective movements need not be straight nor exactly vertical. The carbonator 1 may in other embodiments be configured such that at least one of the movements follows a curve and/or deviates to some extent, for example up to 20 degrees, from the vertical direction.

Importantly, though, the movements are from a vertically higher position to a vertically lower position such that one-hand use is allowed. The forces applied by a user to the carbonating head 3, to the pressurizing manipulator 12 and to the release manipulator 10 are all directed downwards whereby one-hand use is possible. Such forces press the carbonator 1 towards the surface on which it rests and thus there is no need to hold the carbonator 1 or fix it to the surface.

Throughout this disclosure, the direction "downward" is to be understood as referring to the orientation of the carbonator 1 when positioned for operation, as depicted. The arrows B, C and D, in figures 3a, 3b, 5b and 5c are hence directed downward.

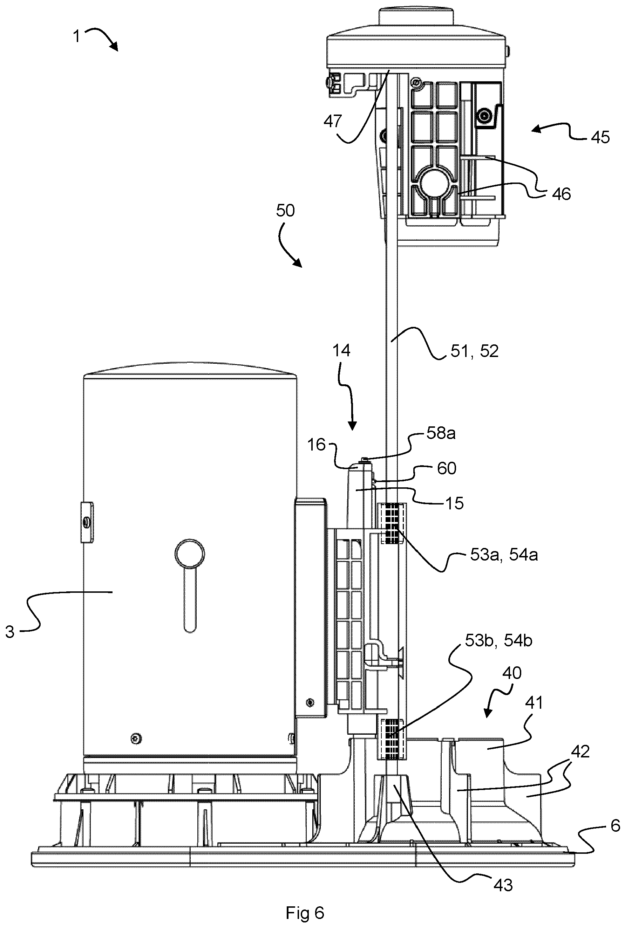

The above described support part 4 and base part 6 are stationary whereas the carbonating head 3 is movable. With particular reference to figures 6 and 7, a guiding assembly 50 that movably connects the carbonating head 3 to the support part 4 will now be described.

The guiding assembly 50 comprises a first and a second guide rod 51, 52 of metal, more precisely of stainless steel.

By the provision of two guide rods 51, 52, the support part 4 may support the carbonating head 3 such that the latter cannot rotate around the longitudinal (axial in figures 6 and 7) direction of the guide rods 51, 52. The guide rods 51, 52 extend in parallel in an imaginary guide rod plane. The guide rods 51, 52 are positioned at a distance from each other, allowing a portion of the CO₂ cylinder to be received in-between the guide rods 51, 52. For example, the guide rods 51, 52 may be positioned 40 to 50 mm apart.

As is particularly clear from figure 6, the lower ends of the guide rods 51, 52 are rigidly supported by the base part 6. The base part 6 internally comprises a foundation structure 40 supporting the guide rods 51, 52. In this embodiment, the foundation structure 40 is made of plastic. ABS plastic is a suitable material for the foundation structure 40 and for all plastic components of this disclosure.

The foundation structure 40 is a rigid structure reinforced by a number of reinforcing ribs 42. The foundation structure 40 has a cylindrical through-opening (not shown) formed by a tubular wall section 41. When the CO₂ cylinder is inserted into the support part 4, the CO₂ cylinder is inserted from below through the through-opening formed by the tubular wall section 41. A number of reinforcing ribs 42 extend radially from the tubular wall section 41.

The foundation structure 40 further comprises two lower rod receiving openings 43 receiving the lower ends of the first and second guide rods 51, 52 (only one opening 43 is visible in figure 6). The lower rod receiving openings 43 are furnished with a reinforcing rib structure and are formed in one piece with the tubular wall section 41. Each lower rod receiving opening 43 have a depth that exceeds the width of the opening, the depth is in this embodiment approximately three times the width. Any transverse forces acting on the guide rods 51, 52 and any torques around axes that are normal to the longitudinal axes of the guide rods 51, 52 are absorbed by the foundation structure 40. Thus, the lower ends of the guide rods 51, 52 are rigidly supported by the base part 6 which, in turn, is firmly connected to the support part 4. The lower rod receiving openings 43 may be blind holes of circular cross-section.

Figure 1 shows the carbonator 1 with the base part housing 6h and the support part housing 4h. The base part housing 6h and the support part housing 4h are made of metal, more precisely of stainless steel, and thereby the housings 4h, 6h offer the carbonator 1 a great deal of rigidity. Other conceivable metals include steel and aluminium. As is indicated, the housings 4h, 6h may be riveted or screwed together (see screw heads 49 at lower and upper ends of support part 4 housing). Through-holes for the rivets or screws are formed in tubular housing portions, one of which snugly fit into the other.

The support part housing 4h is thus rigidly supported by the base part housing 6h. The support part housing 4h in turn rigidly supports an upper support structure 45 provided internally of the support part housing 4h at the upper end thereof.

The upper support structure 45 is provided with a threaded element (not shown) receiving the CO₂ cylinder outlet in a manner known per se, and comprises CO₂ valve means (not shown) controlled by the pressurizing manipulator 12. The upper support structure 45 is a rigid structure, in this embodiment made of plastic, strengthened by a lattice of reinforcing ribs 46. The upper support structure 45 comprises upper rod receiving openings 47 receiving the upper ends of the guide rods 51, 52. Even though not shown in detail, the upper rod receiving openings 47 have a depth that exceeds the width. Thus, the upper ends of the guide rods 51, 52 are rigidly supported by the support part 4. The upper rod receiving openings 47 may be blind holes of circular cross-section.

The guide rods 51, 52 are thus rigidly supported by the carbonator 1. There are support structures 40, 45 rigidly supporting the upper and lower guide rod ends, and the support structures 40, 45 are firmly connected with respect to each other by housings 4h, 6h. The upper and lower guide rod ends are supported such that no displacement and no rotation is allowed. As expressed in beam theory terms, the upper and lower guide rod ends have fixed or build-in support, both displacement (normal to the guide rods) and slope can be set to zero.

As has been mentioned, the carbonating head 3 is carried by the support part 4 by means of the carrier unit 14. The carrier unit 14 carries the carbonating head 3 along the guide rods 51, 52. The carrier unit 14 comprises a number of guide rod engagement means in the form of slide bearings 53a-b, 54a-b.

In other embodiments (not shown), the guide rod engagement means may be guide holes, guide cylinders, a number of angularly distanced rollers, slide bushings or ball bushing bearings.

The slide bearings are constructed to avoid any drawer effect. In the present embodiment, the length of the bearings 53a-b, 54a-b along the longitudinal direction of the assigned guide rod 51, 52 is approximately four times the inner diameter of the bearings 53a-b, 54a-b.

In the embodiment shown in figures 6 and 7, the carrier unit 14 comprises two pairs of slide bearings 53, 54. There is a first pair of slide bearings 53 arranged on a first lateral side (left in figure 7) of the carrier unit 14 that are adapted to slide along the first guide rod 51. There is a second pair of slide bearings 54 arranged on a second lateral side (right in figure 7) of the carrier unit 14 that are adapted to slide along the second guide rod 52. Thus, the carrier unit 14 comprises four slide bearings 53a, 53b, 54a, 54b in total.

The slide bearings 53a-b, 54a-b of the respective pair 53, 54 are arranged coaxial at a distance from each other along the longitudinal axis of the respective guide rod 51, 52. In this example, the said distance approximately equals 15 times the guide rod radius. By providing a pair of slide bearings to travel along a guide rod, a torque transmitted to the guide rod via the carrier unit 14 will be distributed as transverse forces acting on the guide rods 51, 52. In this way, the guide rods 51, 52 even more rigidly support the carrier unit 14 and thus the carbonating head 3. Also, the bending of the guide rods 51, 52 will be minimised. Furthermore, two slide bearings arranged at a longitudinal distance from each other will minimise any drawer effect, and may allow the use of slide bearings of shorter individual length.

The guiding assembly 50 further comprises a biasing arrangement 55 biasing the carrier unit 14, and thus the carbonating head 3, towards its vertically highest position. The biasing arrangement 55 extends in parallel with the first and second guide rods 51, 52. As is can be seen in figure 7, a projection of the biasing arrangement 55 onto the guide rod plane is positioned between the first and second guide rods 51, 52. As is can be seen in figure 6, the biasing arrangement 55 is positioned between the guide rods 51, 52 and the carbonating head 3, as seen from a lateral side of the support part 4.

The biasing force, or spring force, of the biasing arrangement 55 is generated by two gas springs 56a, 56b as is best shown in figure 7. Each gas spring 56a, 56b comprises a tube body 57a, 57b and a piston rod 58a, 58b, as is known per se. The piston rod 58a, 58b is reciprocally movable in and out of a piston opening of the tube body 57a, 57b.

The gas springs 56a, 56b are arranged in opposite directions. As is understood from figure 7, the piston opening of the first gas spring 56a is directed upwards whereas the piston opening of the second gas spring 56b is directed downwards. The tube bodies 57a, 57b are arranged overlapping, more precisely such that they extend over the same longitudinal distance. Thereby, the biasing arrangement 55 occupies the same longitudinal space as one single gas spring, but provides twice the stroke.

The tube bodies 57a, 57b are attached to one another by coupling means in the form of tube brackets 60 at both ends of the biasing arrangement 55. Each tube bracket 60 is an elongated plate shaped element with two through-openings, one for each tube body 57a, 57b. The tube bracket 60 is made of metal, such as steel, in particular stainless steel, or aluminium. Both ends of the respective tube bodies 57a, 57b comprise threaded protrusions (not shown) that when assembled pass though the respective through-openings of the tube brackets 60. The threaded protrusions are fixed to the tube brackets 60 by nuts 59a, 59b.

The carrier unit 14 is in this embodiment made of plastic and comprises a lattice of reinforcing ribs. The carrier unit 14 has a receiving space 15 for the biasing arrangement 55, into which the biasing arrangement 55 moves when in the compressed state, as is shown in figures 6 and 7 where the carbonating head is located in its vertically lowest position. When the biasing arrangement 55 is in its extended state (not shown), i.e. when the carbonating head is located in its vertically highest position, the biasing arrangement will be moved out from the receiving space 15 and be located between the carrier unit 14 and the base part 6.

The biasing arrangement 55 biases the carrier unit 14 and thus the carbonating head 3 away from the foundation structure 40, and thus the base part 6, towards the vertically highest position of the carbonating head 3. The distal end of the first piston rod 58a abuts against the carrier unit 14. The distal end (not shown) of the second piston rod 58b (not shown) abuts against the foundation structure 40.

More precisely, the distal end of the first piston rod 58a abuts against an upper wall 16 of the receiving space 15. In the present embodiment, the upper wall 16 comprises a through-opening for the distal end of the first piston rod 58a. The distal end of the first piston rod 58a is threaded and an internally threaded blocking structure connects the distal end of the first piston rod 58a to the through-opening such that the distal end is fixed from axial displacement in relation to the upper wall 16. The distal end of the second piston rod 58b is received in a blind-hole (not shown) in the foundation structure 40.

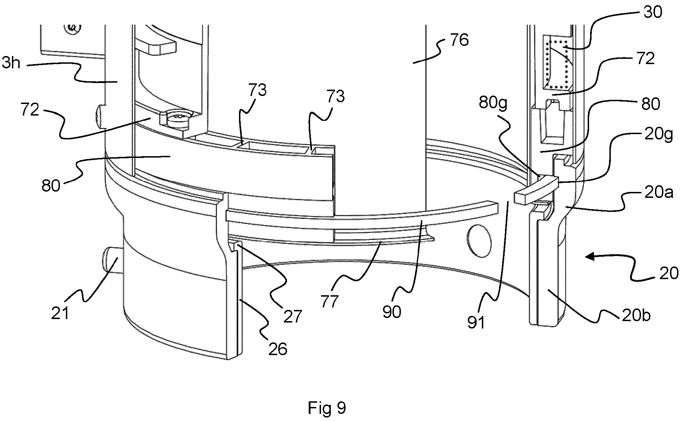

According to the present disclosure, with reference to figures 8 and 9, next will be described how the locking sleeve 20 is rotatably mounted to the carbonating head 3. The locking sleeve 20 of the carbonating head forms part of the bottle compartment 75.

The carbonating head 3 comprises a head support structure 70 arranged internally the carbonating head housing 3h. In this embodiment, the head support structure 3h is made of plastic and comprises a lattice of reinforcing ribs. The present head support structure 70 comprises two half shells that are screwed together. The two half shells for this reason comprise longitudinal flanges 71 with screw or bolt openings, see especially figure 8.

At the upper end, the head support structure 70 comprises fastening elements for the metal lining 76 (described below), for the valve arrangement 8 (only the second venting valve 8b is shown in figure 8), for the valve actuator 9 (not shown in figure 8) and for the dissolver nozzle (not shown). Furthermore, the head support structure comprises fastening elements, e.g. screw holes, for the carrier unit 14. The fastening elements consist of screw holes and abutment surfaces, not discussed in detail.

Towards the lower end, the head support structure 70 supports the release sleeve 30 that is illustrated by the dotted rectangle in figures 8 and 9. The release sleeve 30 surrounds the head support structure 70. The release sleeve 30 is rotatably supported on a horizontal flange 72 of the head support structure 70. The horizontal flange 72 comprises a cut-out (not shown) along its circumference, for the first axial projection 33 of the release sleeve 30.

The lowermost part of the head support structure 70 is a holder 80 for the locking sleeve 20. The holder 80 has the form of a collar or sleeve and is attached to the horizontal flange 72 by a screw connection. In another embodiment (not shown), the holder 80 is an integrated part of the head support structure 70.

The upper cylindrical end face of the holder 80 is of essentially the same dimension as the horizontal flange 72. As is shown, the upper half of the holder 80 comprises inner and outer cylindrical walls connected by a number of strengthening ribs 73 (figure 9). The lower half of the holder 80 is solid. A first groove in form of a holder groove 80g is formed in the holder 80. The holder groove 80g runs around the outer periphery of the holder 80, more precisely around the lower half of the holder 80. The holder groove 80g has a rectangular cross section, and is open radially outwards, see figure 9.

As is most clearly shown in figure 9, the proximal (upper) portion 20a of the locking sleeve 20 comprises a second groove in form of a locking sleeve groove 20g. The locking sleeve groove 20g runs around the inner periphery of the proximal portion 20a. The locking sleeve groove 20g has a rectangular cross section, and is open radially inwards.

In the assembled condition of the carbonator 1, the locking sleeve 20 has been passed over the holder 80 to a position in which the locking sleeve groove 20g is aligned with the holder groove 80g. The sleeve groove 20g and the holder groove 80g face each other. A retaining ring 90 positioned in-between the locking sleeve and the holder now occupies the space jointly provided by the holder groove 80g and locking sleeve groove 20g such that the locking sleeve 20 can no longer be moved axially with respect to the holder 80.

The holder 80 forms a first portion and the locking sleeve 20 forms a second portion and these two portions are rotatably connected by the grooves 80g, 20g and the retaining ring 90.

In this embodiment, the retaining ring 90 has a rectangular cross section. More precisely, the retaining ring is a spiral retaining ring. The retaining ring has no ears or other radially protruding elements that may interfere with the holder 80 or the locking sleeve 20 in an unwanted manner. The cooperating grooves 20g, 80g may then be manufactured to closely enclose the retaining ring 90, with no additional room for ears or other radially protruding elements. A certain play, as is illustrated in figure 9, is beneficial for low-friction rotation of the locking sleeve 20.

The retaining ring is annular with a short break forming a gap 91 in the circumferential direction. The extension of the gap 91 may be increased or decreased by hand, such that the circumference, and thus the diameter, of the retaining ring 90 may be altered. The retaining ring 90 is made of a resilient metal, in this example of stainless steel.

The retaining ring 90 is manufactured with a diameter selected between the diameter of the holder groove 80g and the locking sleeve groove 20g. During assembly, the diameter of the retaining ring 90 is temporarily increased by extending the gap 91 such that the retaining ring 90 can be passed over the lower end of the holder 80. When the extended retaining ring 90 reaches the holder groove 80g, the retaining ring 90 resiliently reassumes its default diameter and is fitted in the holder groove 80g.

The diameter of the retaining ring 90 is next temporarily decreased by a user applying external radial forces, e.g. by a suitable tool, such that the gap 91 is reduced. The locking sleeve 20 may now be passed over the holder 80 and the holder groove 80g until the grooves 20g, 80g are aligned. The retaining ring 90 may now reassume its default diameter and thus lock the locking sleeve 20 to the holder 80.

For disassembly, the locking sleeve 20, more precisely the proximal portion 20a thereof, may be provided with a number of circumferentially separated through-openings (not shown) leading from an external side of the locking sleeve 20 to the locking sleeve groove 20g. A pin may be inserted into each through-opening to reduce the gap 91 of the retaining ring 90. When the diameter of the retaining ring 90 has been decreased, the locking sleeve 20 may be removed from the holder 80.

When the locking sleeve 20 is mounted to the holder 80 by means of the grooves 20g, 80g and the retaining ring 90, the locking sleeve cannot move axially in relation to the holder 80 but may rotate. Since the grooves 20g, 80g extend around the entire circumferences of the locking sleeve 20 and the holder 80, they offer large abutment surfaces for the retaining ring 90. There is very little friction hindering the locking sleeve 20 from rotation with respect to the holder 80 and thus the carbonating head 3. The assembly is tamper further proof and compact.

It is to be understood that the connection provided by the first and second grooves 80g, 20g and the ring 90 can also be used to form beverage container compartments in carbonators of another design. To mention one example, the holder 80 and the locking part 20 may be arranged on a stationary part (similar to the beverage container stand 7 described herein) and cooperate with a moving part (similar to the carbonating head 3 described herein).

In the present embodiment, the head support structure 70 comprises a metal lining 76. The metal lining 76 is a thin-walled and hollow and is adapted to align with the inner shape of the head support structure 70. In the present embodiment, the metal is stainless steel. The upper end of the metal lining 76 is screwed to the head support structure 70. The lower end of the metal lining 76 comprises a radial expansion 77 essentially forming a bell mouth. The radial expansion 77 is adapted to bear against the lowermost edge of the holder 80 as is most clearly shown in figure 9.

The solid lower half of the holder 80 forms the holder groove 80g and also the lowermost edge of the holder 80. As the radial expansion 77 bears against the lowermost edge, the radial expansion 77 securely connects the metal lining 76 to the locking sleeve 20 via the retaining ring 90. In the event of a sudden pressure increase within the container (or bottle) compartment 75, resulting from a bursting bottle, the metal lining 76 will be forced upwards. As is clear from figure 9, upwards movement of the metal lining 76 will involve the radial expansion 77 being forced against the lowermost edge of the holder 80. As this portion of the holder is solid, very large compressive forces will be tolerated without the holder being crushed, also if the holder 80 is made of plastic. The proximal portion 20a of the locking sleeve 20 will be subject to tension forces. The locking sleeve 20, including its locking protrusions 21, is in this embodiment advantageously made of metal, such as steel, in particular stainless steel, or aluminium.

As is clear from the right part of figure 9, the locking sleeve 20 radially surrounds the holder 80 in the area where then holder groove 80g is formed. The locking sleeve 20 further extends axially above and below the holder 80 in the area where the holder groove is formed. Thus, radial and axial forces transmitted from the holder 80 via the retaining ring 90 will be absorbed by the metal locking sleeve 20.

As is also clear from figure 9, the holder 80 and the locking sleeve 20 are shaped such that bottle fragments and water resulting from a bursting bottle will be hindered from escaping through the joint between the holder 80 and the locking sleeve 20. Any escaping bottle fragments will be small and have a low kinetic energy such that there is a low risk that a user be harmed.

In this connection, first of all there is only a small gap between the outer periphery of lower half of the holder 80 and the inner periphery of the proximal portion 20a of the locking sleeve 20. Further, the space (or joint groove) jointly provided by the holder groove 80g and the locking sleeve groove 20g, which space is occupied by the retaining ring 90, will form an obstacle to the bottle fragments. In addition, the holder 80 and the locking sleeve 20 overlap each other forming a path from inside the bottle compartment 75 to the environment (outside the bottle compartment) having two right-angled turns. Thus, the holder 80, the retaining ring 90 and the locking sleeve 20 form a tortuous path from inside the bottle compartment 75 to the environment. Finally, the carbonating head housing 3h radially covers most of the outer gap between the holder 80 and the locking sleeve 20.

As is understood especially from figures 1, 4 and 6, the locking sleeve 20 and the bottle stand 7 are shaped such that bottle fragments and water resulting from a bursting bottle 2 will be hindered from escaping through the joint there between. Any escaping bottle fragments will be small and have a low kinetic energy such that there is a low risk that a user be harmed.

In this connection, first of all the locking sleeve 20, more precisely the distal portion 20b thereof, is received in the bottle stand 7. The locking sleeve 20 and the bottle stand 7 form a path from inside the bottle compartment 75 to the environment having two right-angled turns. There is only a small gap between the outer periphery of the distal portion 20b of the locking sleeve 20 and the inner periphery of the bottle stand 7. The inner periphery of the bottle stand 7 may be formed by the above-mentioned cup-shaped trough-structure (not shown). Furthermore, as is best shown in figure 4, the receiving structure 19 is located above the lower edge of the locking sleeve 20 when the carbonating head 3 is locked to the bottle stand 7. Thus, along most of the periphery (apart from the location of the protrusion receivers 22) any fragments must travel pass the receiving structure 19. The locking sleeve 20 and the bottle stand 7 form a tortuous path from inside the bottle compartment 75 to the environment.

The tortuous paths leading from inside the bottle compartment 75 to the environment comprise sharp turns, such as right-angled turns, such that any bottle fragments either are trapped in the paths, or loose a major part of their kinetic energy before leaving the paths.

The circular shapes of the holder 80 and the locking sleeve 20 will contribute to their ability to absorbed large forces, as the forces will be evenly distributed along the circumferences.

In the present embodiment, the locking sleeve 20 comprises a sleeve lining 26 made of metal, more precisely stainless steel. The sleeve lining 26 is attached to the locking sleeve 20 by a sleeve radial expansion 27, which bears against the radial shelf between the proximal portion 20a and the distal portion 20b of the locking sleeve 20, see figure 9.

The above-described receiving structure 19 of the bottle stand 7 may be made of metal, such as steel, in particular stainless steel, or aluminium. Returning to figure 4, the receiving structure 19 may form part of a cup-shaped trough-structure that is screwed to the foundation structure 40. The cup-shaped trough-structure may be made of metal, such as steel, in particular stainless steel, or aluminium.

A few alternatives on the bottle compartment 75 construction will now be discussed.

In the present embodiment, the major portion of the bottle compartment 75 is surrounded by the metal lining 76, the plastic head support structure 70 and the metal carbonating head housing 3h. Importantly, the metal lining 76 provides a metal surface that circumferentially surrounds the upper portion of the bottle 2. Experiments performed on glass bottles have shown that the area radially surrounding the upper portion of the bottle 2 is especially subject to glass fragments in the unlikely event that the bottle 2 would burst. As an additional layer of protection, the plastic head support structure 70 radially surrounds the upper portion of the bottle 2. As yet an additional layer of protection, the metal carbonating head housing 3h radially surrounds the upper portion of the bottle 2.

The experiments performed involved subjecting the glass bottle to pressures substantially higher than normal use pressures.

Thus, in the present embodiment the bottle compartment 75 provides a two-layer metal protection, and one layer of plastic protection, in the in the area that circumferentially surrounds the upper portion of the bottle 2.

The above-mentioned experiments have shown that there is a substantial vertical force acting to separate the locking mechanism 5.

In the present embodiment, the metal lining 76 is securely locked to the metal locking sleeve 20 by means of the metal retaining ring 90. In the event of a bursting bottle 2, the holder 80 is in the area of the holder groove 80g only subject to compressive forces which allows the holder to be made from plastic. The metal locking sleeve 20 surrounds the holder 80 in the area of the holder groove 80g. The locking sleeve 20 is securely locked to the metal cup-shaped trough-structure of the bottle stand 7 by means of the locking mechanism 5.

Furthermore, in the present embodiment the bottom end of the bottle compartment 75, formed by bottle stand 7, more precisely the metal cup-shaped trough-structure, also provides a metal layer protection.

As has been mentioned, the upper end of the metal lining 76 and the head support structure 70 have openings for the dissolver nozzle and other components. However, there is virtually no risk that bottle fragments will escape through theses openings in the event of a bursting glass bottle 2 within the bottle compartment 75. Firstly, experiments have shown that it is the area radially surrounding the upper portion of the bottle 2 that is especially subject to glass fragments, and not the upper or lower ends of the bottle compartment 75. Secondly, the openings are occupied by the assigned components (e.g. the dissolver nozzle) and thus closed. The openings will be closed either by metal components or by relatively thick and solid plastic components. Furthermore, the metal carbonating head housing 3h forms an ultimate layer of protection.

To compensate for any stress concentrations caused by the openings made in the upper end of the head support structure 70, the upper end of the head support structure 70 may be of increased wall thickness.

In a second embodiment (not shown) the metal lining 76 is omitted.

In the second embodiment, the major portion of the bottle compartment 75 is surrounded by the plastic head support structure 70 and the metal carbonating head housing 3h. The metal carbonating head housing 3h and the plastic head support structure 70 circumferentially surrounds the upper portion of the bottle 2. The holder 80 is made of metal, such as steel, in particular stainless steel, or aluminium.

A third embodiment (not shown) corresponds to the second embodiment but with the holder 80 made of plastic. The holder 80 may be an integrated part of the plastic head support structure 70 or may be a separate part attached to the plastic head support structure 70. A separate holder 80 may be of advantage for reasons of manufacture and assembly. A separate holder 80 may be formed in as a one-piece element member continuously extending circumferentially around the carbonating head 3.

## Claims

1. A carbonator (1) for carbonating a beverage in a beverage container (2), wherein
the carbonator (1) comprises a beverage container compartment (75) that comprises a first portion (80) and a second portion (20) that is rotatably mounted to the first portion (80), **characterized in that**
the first portion (80) comprises a first groove (80g) and the second portion (20) comprises a second groove (20g), and **in that**
the carbonator (1) comprises a retaining ring (90) that is adapted to be arranged in the grooves (80g, 20g) to rotatably mount the second portion (20) to the first portion (80).

2. The carbonator (1) of claim 1, wherein the retaining ring (90) is made of metal.

3. The carbonator (1) of any preceding claim, wherein the second portion (20) is made of metal.

4. The carbonator (1) of any preceding claim, wherein the first portion (80) is made of plastic.

5. The carbonator (1) of any one of claims 1 to 3, wherein the first portion (80) is made of metal.

6. The carbonator (1) of any preceding claim, wherein the first portion (80), the retaining ring (90) and the second portion (20) form a tortuous path from inside the beverage container compartment (75) to the environment outside the container compartment.

7. The carbonator (1) of any preceding claim, further comprising a compartment lid portion (7) adapted to cooperate with the second portion (20) to close the beverage container compartment (75).

8. The carbonator (1) of any preceding claim, wherein the first portion (80) is provided with an inner lining (76) that is made of metal.

9. The carbonator (1) of claim 8, wherein the inner lining (76) comprises a radial expansion (77) that is adapted to bear against an end edge of the holder (80).

10. The carbonator (1) of any preceding claim, wherein the first groove (80g) is open radially outwards the beverage container compartment (75) and the second groove (20g) is open radially inwards the beverage container compartment (75).

11. The carbonator (1) of any preceding claim, comprising
- a carbonating head (3) comprising a dissolver nozzle for introducing carbonating medium into the beverage container (2),
- a support part (4) for movably supporting the carbonating head (3) between a first position and a second position,
- a locking mechanism (5) operable between an unlocked state and a locked state in which the carbonating head (3) is retained in the second position, and
- a base part (6) connected to the support part (4) and comprising a beverage container stand (7) for the beverage container (2),
wherein the second portion (20) is comprised in the locking mechanism (5).

12. The carbonator (1) of claim 11, wherein the beverage container compartment (75) is formed by the carbonating head (3) together with the beverage container stand (7), and wherein the second portion (20) is locked to the beverage container stand (7) by a rotative movement of the second portion (20) in relation to the beverage container stand (7).

13. The carbonator (1) of claim 11 or 12, wherein the carbonating head (3) comprises a carbonating head housing (3h) made of metal.

14. The carbonator (1) of claim 13, wherein the carbonating head housing (3h) circumferentially surrounds the upper portion of the beverage container (2) when the carbonating head (3) is in the second position.

15. The carbonator (1) of claim 14, wherein the carbonating head housing (3h) comprises a lining (76) made of metal that circumferentially surrounds the upper portion of the beverage container (2) when the carbonating head (3) is in the second position.

## Patentansprüche

1. Ein Karbonisierer (1) zum Karbonisieren eines Getränks in einem Getränkebehälter (2), wobei der Karbonisierer (1) ein Getränkebehälterfach (75) aufweist, das einen ersten Abschnitt (80) und einen zweiten Abschnitt (20) aufweist, der drehbar an dem ersten Abschnitt (80) angebracht ist,
**dadurch gekennzeichnet, dass**
der erste Abschnitt (80) eine erste Nut (80g) aufweist und der zweite Abschnitt (20) eine zweite Nut (20g) aufweist, und dass der Karbonisierer (1) einen Haltering (90) aufweist, der so angepasst ist, dass er in den Nuten (80g, 20g) angeordnet werden kann, um den zweiten Abschnitt (20) drehbar am ersten Abschnitt (80) zu befestigen.

2. Der Karbonisierer (1) nach Anspruch 1, wobei der Haltering (90) aus Metall besteht.

3. Der Karbonisierer (1) nach einem der vorhergehenden Ansprüche, wobei der zweite Abschnitt (20) aus Metall besteht.

4. Der Karbonisierer (1) nach einem der vorhergehenden Ansprüche, wobei der erste Abschnitt (80) aus Kunststoff besteht.

5. Der Karbonisierer (1) nach einem der Ansprüche 1 bis 3, wobei der erste Abschnitt (80) aus Metall besteht.

6. Der Karbonisierer (1) nach einem der vorhergehenden Ansprüche, wobei der erste Abschnitt (80), der Haltering (90) und der zweite Abschnitt (20) einen gewundenen Pfad vom Inneren des Getränkebehälterfachs (75) zur Umgebung außerhalb des Behälterfachs bilden.

7. Der Karbonisierer (1) nach einem der vorhergehenden Ansprüche, der ferner einen Fachdeckelabschnitt (7) aufweist, der so angepasst ist, dass er mit dem zweiten Abschnitt (20) zusammenwirkt, um das Getränkebehälterfach (75) zu verschließen.

8. Der Karbonisierer (1) nach einem der vorhergehenden Ansprüche, wobei der erste Abschnitt (80) mit einer Innenauskleidung (76) versehen ist, die aus Metall besteht.

9. Der Karbonisierer (1) nach Anspruch 8, wobei die Innenauskleidung (76) eine radiale Ausdehnung (77) aufweist, die so angepasst ist, dass sie an einer Endkante des Halters (80) anliegt.

10. Der Karbonisierer (1) nach einem der vorhergehenden Ansprüche, wobei die erste Nut (80g) radial nach außen des Getränkebehälterfaches (75) offen ist und wobei die zweite Nut (20g) radial nach innen des Getränkebehälterfaches (75) offen ist.

11. Der Karbonisierer (1) nach einem der vorhergehenden Ansprüche, der Folgendes aufweist:
- einen Karbonisierungskopf (3), der eine Dissolverdüse zum Einbringen von Karbonisierungsmedium in den Getränkebehälter (2) aufweist,
- ein Stützteil (4) zum bewegbaren Stützen des Karbonisierungskopfes (3) zwischen einer ersten Position und einer zweiten Position,
- einen Verriegelungsmechanismus (5), der zwischen einem entriegelten Zustand und einem verriegelten Zustand, in dem der Karbonisierungskopf (3) in der zweiten Position gehalten wird, betätigt werden kann, und
- ein Basisteil (6), das mit dem Stützteil (4) verbunden ist und einen Getränkebehälterständer (7) für den Getränkebehälter (2) aufweist,
wobei der zweite Abschnitt (20) in dem Verriegelungsmechanismus (5) aufgewiesen wird.

12. Der Karbonisierer (1) nach Anspruch 11, wobei das Getränkebehälterfach (75) durch den Karbonisierungskopf (3) zusammen mit dem Getränkebehälterständer (7) gebildet wird und wobei der zweite Abschnitt (20) durch eine Drehbewegung des zweiten Abschnitts (20) in Bezug auf den Getränkebehälterständer (7) mit dem Getränkebehälterständer (7) verriegelt wird.

13. Der Karbonisierer (1) nach Anspruch 11 oder 12, wobei der Karbonisierungskopf (3) ein Karbonisierungskopfgehäuse (3h) aus Metall aufweist.

14. Der Karbonisierer (1) nach Anspruch 13, wobei das Karbonisierungskopfgehäuse (3h) den oberen Teil des Getränkebehälters (2) umfänglich umgibt, wenn sich der Karbonisierungskopf (3) in der zweiten Position befindet.

15. Der Karbonisierer (1) nach Anspruch 14, wobei das Karbonisierungskopfgehäuse (3h) eine Auskleidung (76) aus Metall aufweist, die den oberen Teil des Getränkebehälters (2) umfänglich umgibt, wenn sich der Karbonisierungskopf (3) in der zweiten Position befindet.

## Revendications

1. Saturateur (1) pour saturer une boisson dans un contenant de boisson (2), dans lequel
le saturateur (1) comprend un compartiment de contenant de boisson (75) qui comprend une première partie (80) et une deuxième partie (20) qui est montée en rotation sur la première partie (80), **caractérisé en ce que**
la première partie (80) comprend une première rainure (80g) et la deuxième partie (20) comprend une deuxième rainure (20g), et **en ce que**
le saturateur (1) comprend une bague de retenue (90) qui est adaptée pour être agencée dans les rainures (80g, 20g) pour monter de manière rotative la deuxième partie (20) sur la première partie (80).

2. Saturateur (1) selon la revendication 1, dans lequel la bague de retenue (90) est faite de métal.

3. Saturateur (1) selon une quelconque revendication précédente, dans lequel la deuxième partie (20) est faite de métal.

4. Saturateur (1) selon une quelconque revendication précédente, dans lequel la première partie (80) est faite de plastique.

5. Saturateur (1) selon l'une quelconque des revendication 1 à 3, dans lequel la première partie (80) est faite de métal.

6. Saturateur (1) selon une quelconque revendication précédente, dans lequel la première partie (80), la bague de retenue (90) et la deuxième partie (20) forment un chemin tortueux à partir de l'intérieur du compartiment de contenant de boisson (75) vers l'environnement à l'extérieur du compartiment de contenant.

7. Saturateur (1) selon une quelconque revendication précédente, comprenant en outre une partie de couvercle de compartiment (7) adaptée pour coopérer avec la deuxième partie (20) pour fermer le compartiment de contenant de boisson (75).

8. Saturateur (1) selon une quelconque revendication précédente, dans lequel la première partie (80) est dotée d'une garniture intérieure (76) qui est faite de métal.

9. Saturateur (1) selon la revendication 8, dans lequel la garniture intérieure (76) comprend une expansion radiale (77) qui est adaptée pour être en appui contre un bord d'extrémité de la monture (80).

10. Saturateur (1) selon une quelconque revendication précédente, dans lequel la première rainure (80g) est ouverte radialement vers l'extérieur du compartiment de contenant de boisson (75) et la deuxième rainure (20g) est ouverte radialement vers l'intérieur du compartiment de contenant de boisson (75).

11. Saturateur (1) selon une quelconque revendication précédente, comprenant
- une tête de saturation (3) comprenant une buse de dissolveur pour introduire un milieu de saturation dans le contenant de boisson (2),
- une partie de support (4) pour supporter de manière mobile la tête de saturation (3) entre une première position et une deuxième position,
- un mécanisme de verrouillage (5) pouvant fonctionner entre un état déverrouillé et un état verrouillé dans lequel la tête de saturation (3) est retenue dans la deuxième position, et
- une partie de base (6) reliée à la partie de support (4) et comprenant un socle de contenant de boisson (7) pour le contenant de boisson (2),
dans lequel la deuxième partie (20) est comprise dans le mécanisme de verrouillage (5).

12. Saturateur (1) selon la revendication 11, dans lequel le compartiment de contenant de boisson (75) est formé par la tête de saturation (3) conjointement avec le socle de contenant de boisson (7), et dans lequel la deuxième partie (20) est verrouillée sur le socle de contenant de boisson (7) par un mouvement rotatif de la deuxième partie (20) par rapport au socle de contenant de boisson (7).

13. Saturateur (1) selon la revendication 11 ou 12, dans lequel la tête de saturation (3) comprend un logement (3h) de tête de saturation fait de métal.

14. Saturateur (1) selon la revendication 13, dans lequel le logement (3h) de tête de saturation entoure de manière circonférentielle la partie supérieure du contenant de boisson (2) lorsque la tête de saturation (3) est dans la deuxième position.

15. Saturateur (1) selon la revendication 14, dans lequel le logement (3h) de tête de saturation comprend une garniture (76) fait de métal qui entoure de manière circonférentielle la partie supérieure du contenant de boisson (2) lorsque la tête de saturation (3) est dans la deuxième position.
